# EUROPEAN PATENT APPLICATION

(11) **EP 4 768 396 A1**
(43) Date of publication of application: **01.07.2026**
(21) Application number: 25225426.3
(22) Date of filing: 19.12.2025
(51) Int. Cl.: B64U 70/90, B64U 70/99, B64U 70/30

(54) **A SYSTEM FOR AUTOMATED CAPTURING AND LAUNCHING AN UNMANNED AERIAL VEHICLE**

(30) Priority: 01.10.2025 UA 202504793
(71) Applicant: Stepura, Oleksandr, 08141 Sviatopetrivske Kyivska oblast (UA)
(72) Inventor: Stepura, Oleksandr, 08141 Sviatopetrivske Kyivska oblast (UA)
(74) Representative: AOMB Polska Sp. z.o.o.

(57) **Abstract**

The claimed invention relates to an automated system for capturing and launching an unmanned aerial vehicle (UAV) with a fixed wing. The system comprises a base with a secured manipulator, an end of the manipulator is equipped with a gripping and launching means. There is a control unit that communicates with the UAV for exchanging data, determining coordinates of a meeting point, synchronizing actions, controlling a position and launching the UAV. The manipulator has four sections. A first section is hingedly connected to the base and may controllably rotate within a semi-spherical trajectory. It is equipped with a mechanism for adjusting length and compensating for loads. A second section is L-shaped, its horizontal part is connected to the first section and is capable of maintaining a horizontal position. A third section and a fourth section are also hingedly connected so as to ensure coaxial fixation. The structure allows to sequentially fold and unfold elements of the manipulator in one half-turn, thereby ensuring accurate capturing or launching of the UAV.

## Description

### FIELD OF THE INVENTION

The claimed invention relates to the field of unmanned aerial vehicle maintenance and concerns a structure of an automated system for launching and landing an unmanned aerial vehicle with a fixed wing.

### PRIOR ART

Unmanned aerial vehicles (hereinafter to as UAVs) with fixed wings are efficient due to their aerodynamic characteristics, wide operating range and ability to carry a payload. However, for launching and landing, they usually require a certain amount of space, while launching and landing operations are carried out using separate means, in particular, runways, catapults, and capturing cables, nets, etc. Said equipment occupies a certain area and creates difficulties in operating UAVs from moving objects such as ship platforms or other vehicles, which, in addition to limited space, are also subjected to changes in their own position both during motion and under influence of external factors such as waves or wind. To solve this problem, systems for launching and/or capturing are being developed, and the configuration and functionality allow gripping, landing, and launching UAVs within a limited space with consideration of a change in relative positions of elements of the system itself, a body of the moving vehicle, and the UAV itself.

The prior art teaches systems for interaction with UAVs, the systems are equipped with manipulators that differ in configuration, a number of degrees of freedom, and a type of a gripping or launching device, and development of technology allows to make such systems automated. Such systems are often limited to performing only one function (capturing or launching), have large dimensions, thereby complicating their use under mobile conditions, while a complex system of hinges and drives requires careful maintenance. An alternative solution is to create systems having an optimized structure that combines a capability of both safe launching and reliable capturing of UAVs, while reducing a number of mechanical units and simplifying the structure to improve reliability and ease of operation, as well as allowing their use, in particular, on a ship's deck.

Patent US10759052B2 dated September 1, 2020 discloses a system for capturing and/or launching a UAV, the system has a movable base, a two-sectional manipulator mounted on the base, an end of a second section is equipped with an actuator for gripping and launching the UAV, as well as a control unit for controlling a position of the base, the manipulator sections, and the actuator, thereby allowing to collect data about the UAV's movement and to coordinate a motion of the system's elements so that the actuator for gripping and launching interacts with the UAV at a required precise position for its gripping or launching. In this case, the actuator is an electromagnet, and the UAV is equipped with a metal contact plate, thereby forming an electromagnetic lock upon contact, thereby ensuring accurate capturing and releasing of the UAV. Disadvantages of this system include the limitation of the manipulator's degrees of freedom to two links, which, even when a movable base and reliable electromagnetic retention are present, is not sufficient for stabilizing the UAV's spatial position relative to pitching of a deck, besides, use of an electromagnet requires a powerful energy storage device, such as a supercapacitor, which, apart from complicating and increasing the cost of the structure, is a source of electromagnetic interference that can affect the accuracy of the system's operation.

Patent US8172177B2 dated May 8, 2012 discloses a system for capturing and stabilizing a UAV, the system comprises a base, a multi-sectional manipulator having a sequential kinematic structure with four driven rotary hinges, an end of a last section of the manipulator is equipped with a gripping and launching device that includes two posts with fasteners that hold a loop of a capturing cable with a horizontal portion, and an open section of the cable is connected to a winch drum, on which a brake and a motor act. The system further comprises sensor devices for assessing vessel motion and for determining the UAV's position, and the UAV is equipped with a locking hook. The base can be mounted to a deck of the vessel, an axis of a first hinge that connects the base to a first movable section is perpendicular to the deck, and axes of second, third, and fourth hinges are parallel to each other and perpendicular to the axis of the first hinge. This system is capable of compensating for the vessel's motion caused by waves, thereby keeping the capturing mechanism stable when the UAV approaches, and the sequence and functionality of the connection of the manipulator sections ensure stabilization of the UAV's position after gripping until it is completely stationary and suspended below the gripping and launching device.

A disadvantage of this structure is that dissipation of kinetic energy after engagement with the UAV is achieved mainly due to the elasticity of the cable, the brakes, and the compliance of the manipulator's structure, which can lead to a strong jerk and require reinforcement of the UAV's own structure. In addition, although the system elements allow to stabilize the UAV after capture, its large dimensions complicate removal and placement of the UAV on the deck.

The closest solution to the claimed invention is disclosed in patent US7410125B2 dated August 12, 2008 that discloses an automatic system for capturing and/or launching a UAV with a fixed wing, the system comprises a supporting platform with a base, a manipulator attached thereto, an end of a last section of the manipulator is equipped with a gripping and launching means, and a control unit for controlling a position of the base and the manipulator, the control unit is configured to maintain communication with the UAV for data exchange followed by determination of coordinates of a meeting point of the gripping and launching means with a corresponding element of the UAV, synchronization of the manipulator's and UAV's actions, control of the UAV's position at the moment of launching, and initiation of its launching. The manipulator is two-sectional and robotic, and it has six independent axes of controlled motion. An end of the manipulator is equipped with a gripping and launching means for interaction with the UAV, feedback sensors for determining, in real time, a relative position of the gripping and launching means with respect to the UAV, the manipulator is configured to automatically maneuvering the end of its section with the gripping means relative to the approaching UAV during flight and providing feedback for the movement and positioning of the manipulator and the base. The gripping means is a frame that is equipped with a system of cables, one of the cables is intended for contact with a corresponding interacting element of the UAV, for example, a hook, while other cables are connected to braking elements to decelerate the UAV after capture. For launching the UAV, a tensioned contact cable of the capturing means is used, with synchronization of the operation of the braking mechanisms for cable tension, fixation of the UAV's contacting element on the cable, imparting of accelerating motion to the manipulator, and positioning of its end at a launching point. At the same time, the system provides a locking mechanism for securing the UAV between a capture state and a launch state, for example, an electromagnetic plate on the platform. Use of a multi-axis manipulator and unification of the gripping and launching means into a single gripping and launching means allow to solve the task of automatic maneuvering of the system under conditions of mobility and platform instability, while performing precise capturing, stabilization, and launching of the UAV. However, providing the motion of links of the manipulator in six degrees of freedom requires a complex algorithm for calculating position, orientation, and trajectory of its movement, demands a large number of drives and controllers, and has significant energy consumption, which under mobile operation conditions is not rational, as it complicates the structure and carries high risks of system failure.

Thus, there is a need to improve the system for interaction with unmanned aerial vehicles, which would combine universality of operation for both launching and gripping, ensure compact structure, reliable performance under dynamic conditions, maintenance convenience, and high operational efficiency.

### SUMMARY OF THE INVENTION

An objective of the invention is to improve a system for automated capturing and launching a UAV in order to ensure its reliable and accurate catching by synchronizing a motion of system elements with a motion trajectory of the UAV, safe braking and controlled stabilization due to ensuring, within the system, a smooth absorption of the UAV energy that occurs during capturing, while at the same time lowering it down, and controlled launching due to synchronization of controlling a UAV position and initiation of a launching moment.

The objective is achieved by providing an automatic system for capturing and launching a UAV, the system comprises a base and a manipulator attached thereto, an end of a last section of the manipulator is equipped with a gripping and launching means, and a control unit for controlling a position of the base and the manipulator, the control unit is configured to maintain communication with the UAV for data exchange followed by determination of coordinates of a meeting point of the gripping and launching means with a corresponding element of the UAV, synchronization of the manipulator's and UAV's actions, control of the UAV's position at the moment of launching, and initiation of its launching. According to the invention, the manipulator comprises four sections, a first section is hingedly connected to the base so as to enable controlled rotation around its own axis and within a semi-spherical trajectory, and it is further equipped with a means for adjusting length and compensating for an axial movement load. A second section is L-shaped, and its horizontal area is hingedly connected to an end of the first section so as to ensure controlled rotation around the axis of the horizontal area and relative to the first section within the trajectory, thereby ensuring maintaining of the horizontal spatial position. A third section of the manipulator is hingedly connected to an end of a vertical area of the second section so as to enable their coaxial fixation, and a fourth section is connected to the third sections so as to enable their coaxial fixation. The manipulator is configured to successively fold or unfold the fourth section, the third section and the vertical area of the second section one relative to another one in one half-turn of a horizontal area of the second section around its axis and rotation around an axis of the connection between the horizontal area of the second section and the first section at the moment of capturing or launching the UAV.

The set of said features allows to ensure a kinematic chain of the system that is functionally divided into a stabilization unit and a UAV interaction unit. Said structure of the first section of the manipulator allows to create, together with the base, a unit that compensates for a possible change of an own position of a platform of a movable vehicle on which the system is mounted such as yawing, pitching and rolling, vertical movements, etc., thereby creating an inertially stable reference point for operation of the entire system. The change of the length of the first section with compensation for the load allows to change an operation range of the manipulator to specific conditions and to ensure reduction of dynamic loads, thereby increasing a positioning accuracy. Structural features of the second section and its interrelation with other elements of the manipulator forms a unit for transition of the linear movement of the UAV into rotational and vice versa depending on a function being performed by the system, i.e., capturing or launching, while providing a movement direction around a longitudinal axis of its horizontally oriented part. Structural features and interrelation of the third section and the fourth section with the structure of the system allow to change a rotation radius of the UAV, thereby allowing to smoothly adjust the load onto the system elements by changing a distance of the UAV relative to the rotation axis without any additional dampening elements. Therefore, a technical effect that is achieved upon implementation of the invention lies in ensuring a shift of inertial forces that occur during launching and catching the unmanned aerial vehicle owing to the structure of the multi-sectional manipulator that is equipped with the means for adjusting length and compensating for the axial load, as well as owing to the successive folding of its sections, while limiting their movement speed. The above-mentioned features allow to create a compact system that can operate in a fully automated mode, with reduction of dynamic loads on the system elements, safe catching, controlled lowering and launching of the UAV are ensured in the system.

According to one of possible exemplary embodiments of the invention, the base is gyrostabilized, thereby further reducing the influence of external oscillations and vibrations on the system operation and increasing stability of the spatial position of the elements of the manipulator, in particular, accuracy of movement and positioning of the fourth section relative to the spatial position of the UAV.

According to another one of possible exemplary embodiments of the invention, lengths of the third section and the fourth section, as well as of the vertical area of the second section, are at least identical. This structure increases a uniform redistribution of energy during turn and folding or unfolding of the sections and synchronous change of the position of the end of the manipulator together with the UAV relative to the rotation axis, thereby further enhancing the stabilization of the system.

According to another one of possible exemplary embodiments of the invention, the controlled movement of the sections of the manipulator is ensured by hinged connections that are equipped with servo drives with brakes, as well as position and motion sensors. The servo motors allow smooth and accurate movement of the sections to a given position, the brakes integrated into the hinged connections ensure keeping the sections in an immovable state even in case of turning off the power or load changes, and they avoid non-controlled movement of the sections in emergency situations or during holding the UAV, thereby reducing a risk of destruction of the units under dynamic influences. The positioning and movement sensors ensure coordination between movements of the manipulator and the trajectory and position of the UAV, allow to compensate for deviation and to correct the movement in real time. This combination increases accuracy and stability of the controlled movement of the sections of the manipulator, their retention in a given position, safe operation during gripping and lowering the UAV, as well as a possibility of synchronization of the manipulator actions with the UAV movement during launching.

According to another one of possible exemplary embodiments of the invention, the gripping and launching means is a fixing element that is configured to hold the UAV during its capturing or launching, thereby allowing to ensure both controlled disengagement of the UAV at a required take-off moment and a reliable gripping during engagement, and it allows to perform two tasks with the single means without any changes.

According to separate exemplary embodiments, the gripping and launching means is made as a passive element, e.g., a V-shaped clip, or in a form of an active element, e.g., an electromagnetic area. This structure may be implemented by known means, it can be integrated into the system and guarantee the interaction between the end of the manipulator and the corresponding contact means of the UAV.

Therefore, the claimed system combines elements for stabilization, targeting, gripping and effective kinematic mechanism for energy absorption, and it is suitable for launching, gripping and stabilizing the UAV position in conditions of limited space and instable surface.

### BRIEF DESCRIPTION OF THE DRAWINGS

In order to provide more complete understanding of the claimed invention and advantages thereof, the following description provides an explanation of a possible implementation thereof with reference to figures of the appended drawings, wherein identical designations denote identical parts, and which illustrate the following:
- Fig. 1 illustrates a general view of the system at the moment of capturing or launching the UAV according to the claimed invention;
- Fig. 2 illustrates a general view of the system at the end of capturing or before start of launching the UAV according to the claimed invention;
- Fig. 3 illustrates a schematic view of a possible structural embodiment of the system for capturing or launching the UAV in a folded state;
- Fig. 4 illustrates a schematic view of a possible embodiment of the structural implementation of the system for capturing or launching the UAV with positioning of the sections of the manipulator during sequence of folding/unfolding and start of rotation of its sections;
- Fig. 5 illustrates a schematic diagram that demonstrates an interconnection and sequence of actions in controlling the system for automated capturing and launching the UAV.

### IMPLEMENTATION OF THE INVENTION

A system for automated capturing and launching a UAV comprises a base 1, a manipulator 2 that is secured to the base 1, the manipulator comprises four sections that are interconnected by means of hinged connections 3. A first section 4 is connected to the base 1 so as to be controllably rotatable around its own axis and within a semi-spherical trajectory that is ensured by the hinged connection 3. The hinged connection between the manipulator 2 and the base 1 is a spherical or versatile hinge that ensures rotation of the first section within the semi-sphere at 360° and around its own axis, and motorized with electronic sensors 15 and drives for active positioning. The first section 4 is equipped with a means 5 for adjusting length and compensating for load of an axial movement, the means may be a telescopic connection of links of the section 4 to a hydraulic or electrical drive. A second section 6 is L-shaped, and its horizontal area 6a is hingedly connected to an end of the first section 4 so as to ensure controlled rotation, thereby ensuring maintaining of the horizontal spatial position. The hinged connection between the second section 6 and the first section 4 may be a spherical hinge at an end of a rod with rotation almost by 360° along a sphere and around the axis, and comprise active gyrostabilization sensors integrated therein. This ensures to maintain the hinge position with minimum movement within the inertial system and to orient the horizontal area 6a in a stable position. A vertical area 6b of the second section 6 is hingedly connected to a third section 7. The third section 7 is hingedly connected to an end of the vertical area 6b of the second section so as to allow coaxial fixation. A fourth section 8 is hingedly connected to the third section 7 so as to allow coaxial fixation, and a gripping and launching means 9 is mounted on an end thereof, the gripping and launching means is configured to hold the UAV 10 during its capturing or launching.

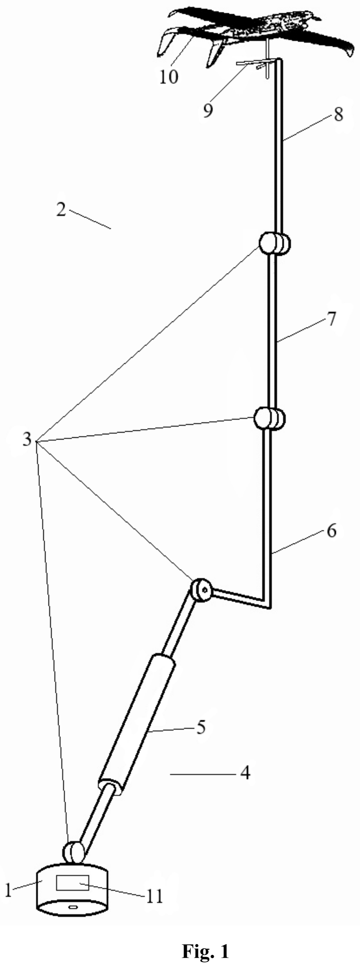

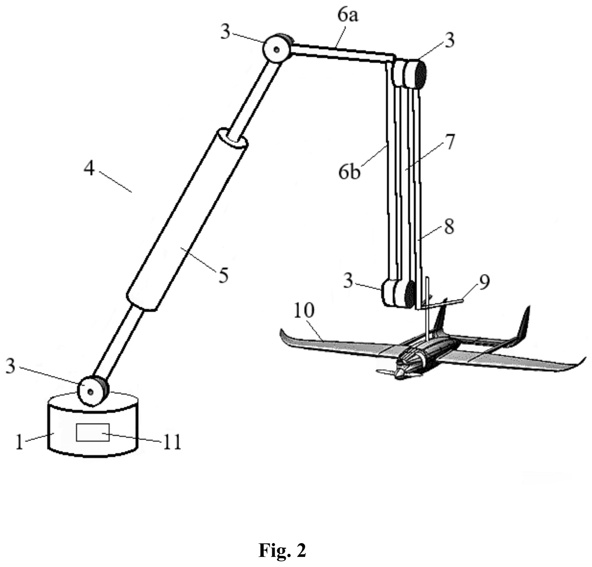

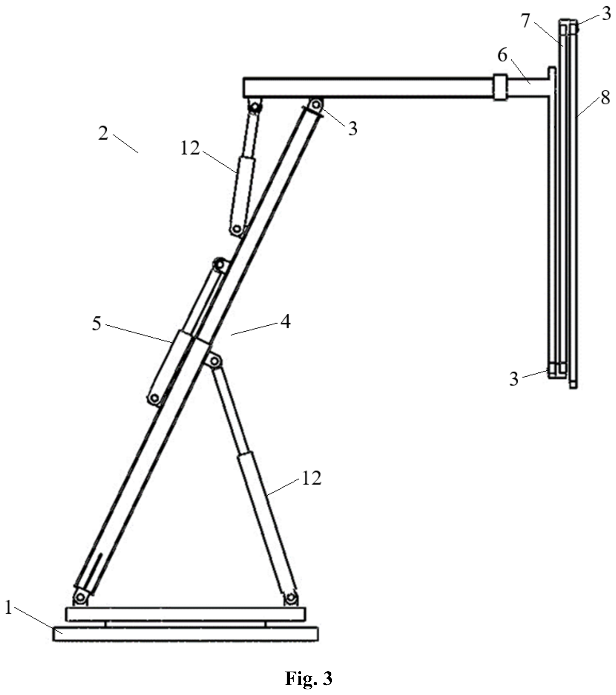

The hinged connection between the third section 7, the vertical area 6b of the second section 6 and the fourth section 8 may be a rotary motorized hinge equipped with servo drives 13 with brakes 14, which allows these sections to tilt 360° relative to each other in the vertical plane. This ensures maximum mast-like initial position of the end of the manipulator 2 (Fig. 1) and sequential folding of the section until fixation of the position of the end of the manipulator 2 at the level of the axis of rotation of the horizontal area 6a (Fig. 2). The control unit 11 ensures maintaining communication with the UAV 10 for data exchange, determining coordinates of the meeting point of the means 9 for capturing and launching the UAV with the vehicle, synchronizing actions of the manipulator 2 and the UAV 10, controlling the position of the UAV 10 at the moment of launching and initiating its launching. Fig. 3 illustrates a possible structural embodiment of the system in the folded state. In this position, the manipulator 2 has compact dimensions, thereby facilitating transportation and storage of the system. At the same time, the position of the base 1, the first section 4, and the horizontal area 6a of the second section 6 can be further stabilized by means of supports 12, which may be spring-loaded or made in the form of pneumatic or hydraulic cylinders, providing vibration damping and compensation of external loads during system operation, and serving as actuating elements of the gyrostabilization of the base 1, into which gyroscopes and accelerometers may be integrated, similar to solutions known from the prior art.

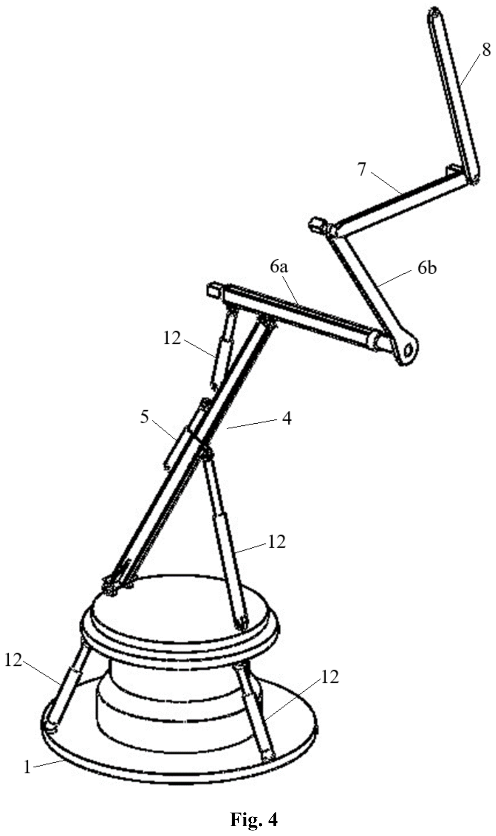

Fig. 4 illustrates the system in a dynamic operating mode, when the base 1 ensures active gyro stabilization and serves as a reference point for a complex spatial movement of the sections of the manipulator 2, and it shows a possible embodiment of positioning of the sections of the manipulator during sequence of folding/unfolding and start of rotation of its sections. The manipulator 2 is configured to sequentially fold or unfold the fourth section 8, the third section 7 and the vertical area 6b of the second section during one half-turn of the horizontal area 6a around its axis. In the initial state, the manipulator 2 is in the folded position (see Fig. 3), thereby ensuring compactness of the structure and transportation convenience. Before the start of the UAV 10 capturing or launching process, the control unit 11 switches the system to the operating mode. Based on the data obtained from navigation sensors and the UAV 10 itself, the control unit 11 determines the movement trajectory and coordinates of the meeting point of the gripping and launching means 9 with the corresponding element of the UAV 10. According to these calculations, the manipulator 2 is deployed: the fourth section 8, the third section 7 and the vertical area 6b of the second section are sequentially unfolded during one half-turn of the horizontal area 6a of the second section (see Fig. 4). This allows the gripping and launching means 9 to be quickly and precisely brought into the given spatial position. At the moment of approach of the UAV 10, the system switches to a trajectory matching mode. Owing to the gyrostabilized base 1, external vibrations and tilts are compensated, thereby ensuring stability of the position of the manipulator 2 in space. The control unit 11 synchronizes the movement of the manipulator 2 with the trajectory of the UAV 10, after which the gripping and launching means 9 connects to the UAV 10 and secures it (see Fig. 1-2). In the capturing mode, the system holds the UAV 10 in a stable position, thereby preventing its uncontrolled oscillations. In the launching mode, after synchronization of the vehicle's position and confirmation of readiness from the UAV 10, the control unit 11 initiates its start. At the same time, the gripping and launching means 9 releases the vehicle at a defined point in space, thereby ensuring a safe and controlled entry of the UAV onto its flight trajectory.

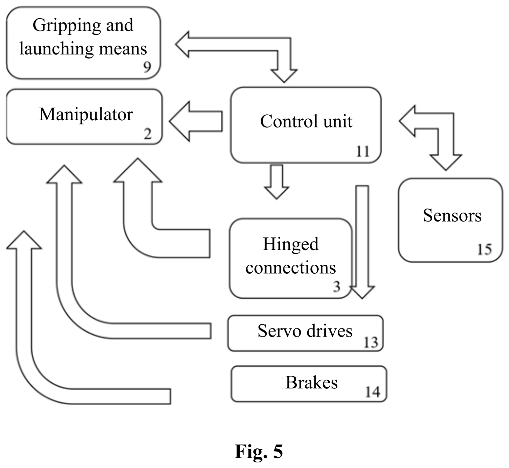

Sequence and interrelation of all actions performed by the system during capturing and launching are shown in the form of a schematic diagram in Fig. 5, which generally illustrates the schematic diagram that demonstrates interrelation and sequence of actions during control of the system. At the initial stage, the control unit 11 receives data from the UAV 10, activates the stabilization system of the base 1, and the manipulator 2 is deployed, during which the servo drives 13 in the hinged connections 3 move the sections 4-8, while the brakes 14 hold the passed positions, thereby preventing uncontrolled oscillations. When the gripping and launching means 9 approaches and contacts the UAV 10, coordinates of the meeting point are determined, the movement of the manipulator 2 is corrected, and the gripping and launching means 9 connects with the UAV 10. The brakes 14 lock the hinged connections 3, while holding the manipulator 2 in the required position. The gripping and launching means 9 holds the UAV 10. For launching, the control unit 11 checks the orientation and parameters of the UAV 10, initiates the launch and activates the release of the means 9. Thus, the control unit 11 maintains communication with the UAV 10 for data exchange, determines the coordinates of the meeting point of the gripping and launching means 9 with the vehicle, synchronizes the actions of the manipulator 2 and the UAV 10, controls the position of the UAV at the moment of launch, and initiates the launch process. The claimed invention ensures creation of the system that provides reliable and safe capturing of the UAV on platforms of movable objects in conditions of their instable position, while minimizing peak loads on elements of the system with kinematics, as well as providing active stabilization of the meeting and gripping point, and dynamic dampening of the energy, due to keeping the main stabilization unit of the system immovable in space and conversion of the linear kinetic energy of the UAV into a controlled rotational movement with the changeable radius due to folding the sections of the manipulator, thereby ensuring smooth and safe dampening of the inertia.

### Main designations:

- 1: the base,
- 2: the manipulator,
- 3: the hinged connections,
- 4: the first section,
- 5: the means for adjusting length and compensating for the load of the axial movement of the first section,
- 6: the second section,
- 6a: the vertical area of the second section,
- 6b: the horizontal area of the second section,
- 7: the third section,
- 8: the fourth section,
- 9: the gripping and launching means,
- 10: the UAV,
- 11: the control unit,
- 12: supports,
- 13: the servo drives,
- 14: the brakes,
- 15: the sensors.

## Claims

1. A system for automated capturing and launching an unmanned aerial vehicle, UAV (10), the system comprises a base (1) and a manipulator (2) attached thereto, an end of a last section of the manipulator (2) is equipped with a gripping and launching means (9), and a control unit (11) for controlling a position of the base (1) and the manipulator (2), the control unit (11) is configured to maintain communication with the UAV (10) for data exchange followed by determination of coordinates of a meeting point of the gripping and launching means (9) with a corresponding element of the UAV (10), synchronization of the manipulator's (2) and UAV's (10) actions, control of the UAV's (10) position at the moment of launching, and initiation of its launching, **wherein** the manipulator (2) comprises four sections,
a first section (4) is hingedly connected to the base (1) so as to enable controlled rotation around its own axis and within a semi-spherical trajectory, and it is further equipped with a means for adjusting length and compensating for an axial movement load (5),
a second section (6) is L-shaped, and its horizontal area (6a) is hingedly connected to an end of the first section (4) so as to ensure controlled rotation around the axis of the horizontal area (6a) and relative to the first section (4) within the trajectory, thereby ensuring maintaining of the horizontal spatial position,
a third section (7) is hingedly connected to an end of a vertical area (6b) of the second sections (6) so as to enable their coaxial fixation,
a fourth section (8) is connected to the third section (7) so as to enable their coaxial fixation,
and the manipulator (2) is configured to successively fold or unfold the fourth section (8), the third section (7) and the vertical area (6b) of the second section (6) one relative to another one in one half-turn of a horizontal area (6a) of the second section (6) around its axis and rotation around an axis of the connection between the horizontal area (6a) of the second section (6) and the first section (4) at the moment of capturing or launching the UAV (10).

2. The system according to claim 1, **wherein** the base (1) is gyrostabilized.

3. The system according to claim 1 or claim 2, **wherein** lengths of the third section (7) and the fourth section (8), as well as the vertical area (6b) of the second section (6) are at least identical to each other.

4. The system according to claims 1-3, **wherein** the controlled movement of the sections of the manipulator (2) is ensured by hinged connections (3) equipped with servo drives (13) with brakes (14), as well as position and motion sensors (15).

5. The system according to claims 1-4, **wherein** the gripping and launching means (9) is a fixing element that is configured to hold the UAV (10) during its capturing or launching.

6. The system according to claims 1-4, **wherein** the gripping and launching means (9) is made as a passive element, e.g., a V-shaped clip.

7. The system according to claims 1-4, **wherein** the gripping and launching means (9) is made as an active element, e.g., an electromagnetic area.
